# EUROPÄISCHE PATENTSCHRIFT

(11) **EP 3 274 127 B1**
(45) Veröffentlichungstag und Bekanntmachung des Hinweises auf die Patenterteilung: **25.12.2019**
(21) Anmeldenummer: 16712312.4
(22) Anmeldetag: 23.03.2016
(51) Int. Cl.: B23Q 1/62, B23Q 5/40

(54) **VORSCHUBEINRICHTUNG UND VERTIKALDREHMASCHINE MIT DERSELBEN**
ADVANCING DEVICE AND VERTICAL LATHE HAVING SAME
DISPOSITIF D'AVANCE ET TOUR VERTICAL MUNI DE CE DISPOSITIF D'AVANCE

(30) Priorität: 25.03.2015 DE 102015205405
(43) Veröffentlichungstag der Anmeldung: 31.01.2018
(73) Patentinhaber: EMCO Magdeburg GmbH, 39124 Magdeburg (DE)
(72) Erfinder: GALOCI, Ingolf, 39106 Magdeburg (DE)
(74) Vertreter: Hoffmann Eitle
(86) Internationale Anmeldenummer: PCT/EP2016/056372
(87) Internationale Veröffentlichungsnummer: WO 2016/151012

(56) Entgegenhaltungen:
- EP-A1- 0 941 790
- DE-A1- 1 602 902
- DE-A1- 4 312 563
- DE-A1- 19 904 860

## Beschreibung

### Technisches Gebiet

Die vorliegende Erfindung betrifft eine Einrichtung zum Vorschub bzw. Zustellen einer Bearbeitungseinrichtung einer Vertikaldrehmaschine. Bearbeitungseinrichtung und Vertikaldrehmaschine sind zur Bearbeitung eines bevorzugt metallischen Werkstücks. Die Bearbeitungseinrichtung kann insbesondere ein Werkzeugrevolver sein. Die Vorschubeinrichtung weist einen ersten Schlitten zum Verfahren der Bearbeitungseinrichtung in eine erste Richtung und einen zweiten Schlitten zum Verfahren der Bearbeitungseinrichtung und des ersten Schlittens in eine zweite, sich von der ersten Richtung unterscheidende Richtung auf. Bevorzugt sind die erste und die zweite Richtung rechtwinklig zueinander. Ferner bezieht sich die vorliegende Erfindung auf eine Vertikaldrehmaschine mit einer Bearbeitungseinrichtung und der erfindungsgemäßen Vorschubeinrichtung zum Verfahren der Bearbeitungseinrichtung.

### Stand der Technik

Vertikaldrehmaschinen zum Bearbeiten von Werkstücken, die bevorzugt zumindest abschnittsweise aus Metall oder metallähnlichen Werkstoffen ausgebildet sind, können ein Maschinengestell oder -bett, eine vertikale Werkstückspindel zur Aufnahme eines zu bearbeitenden Werkstücks und eine Bearbeitungseinrichtung, beispielsweise einen Werkzeugrevolver, zur Bearbeitung des in der Werkstückspindel aufgenommenen Werkstücks aufweisen. Die Bearbeitungseinrichtung kann ferner über eine am Maschinengestell gelagerte Vorschubeinrichtung relativ zu dem in der Werkstückspindel eingespannten Werkstück verfahrbar sein.

Es sind Vorschubeinrichtungen bekannt, mittels denen die Bearbeitungseinrichtung in Richtung der vertikalen Rotationsachse der Werkstückspindel, der Z-Richtung, und rechtwinklig dazu entlang des Maschinengestells, der X-Richtung, relativ zur Werkstückspindel verfahrbar ist. Über diese beiden Vorschubbewegungen, auch "Achsen" genannt, lassen sich rotationssymmetrische Werkstücke erzeugen.

Ferner sind Vorschubeinrichtungen bekannt, die zusätzlich ein Verfahren der Bearbeitungseinrichtung rechtwinklig zu der von X- und Z-Achse aufgespannten Ebene ermöglichen, also in die Y-Richtung. So bezieht sich die DE 10 2008 045 069 A1 (Schuster, Helmut) beispielsweise auf eine Vertikalbearbeitungsmaschine mit einem ersten Schlitten zum Verfahren eines Werkzeugrevolvers in die Z-Richtung, einem zweiten Schlitten zum Verfahren des Werkzeugrevolvers in die X-Richtung, der auf dem Z-Schlitten gelagert ist, und einem dritten Schlitten zum Verfahren des Werkzeugrevolvers in die Y-Richtung, wobei sich die Führung des dritten Schlittens von der Oberseite des zweiten Schlittens in die Y-Richtung erstreckt. Ferner ist durch die DE 10 2011 110 117 A1 (EMAG Holding GmbH) die Vorschubeinrichtung einer Schleifmaschine bekannt geworden. Bei dieser Vorschubeinrichtung erstreckt sich der Y-Schlitten von einer Seitenfläche des X-Schlittens in die X-Richtung.

Hier sind ferner noch die DE 43 12 563 A1, welche eine Fräsmaschine mit Fräskopf 10 und Frässtock 18 beschreibt, wobei der Fräskopf über einen Kreuzschlitten 26 in zwei Richtungen translatorisch verschiebbar ist, die DE 16 02 902 A1, welche eine Einständer-Karussell-Werkzeugmaschine mit einem waagrecht und senkrecht verstellbar angeordneten, motorisch schwenkbaren Revolverkopf sowie die Schriften DE 199 04 860 A1 und EP 0 941 790 A1 als weitere Beispiele zu nennen.

Der Arbeitsraum von Vertikaldrehmaschinen ist eingehaust. Vertikaldrehmaschinen werden ferner häufig in Verbindung mit einer daneben vorgesehenen Werkstückzufuhr und Werkstückabfuhr betrieben. Werkstücke der Werkstückzu- und -abfuhr werden dem eingehausten Arbeitsraum durch Fenster zugeführt. Es ist nicht unüblich, dass die Werkstückspindel und/oder Bearbeitungseinrichtung sie von der Werkstückzufuhr aufnimmt und sie nach der Bearbeitung auf die Werkstückabfuhr ablegt. Dabei ist die Vorschubeinrichtung mit der Bearbeitungseinrichtung im Allgemeinen zwischen Werkstückzufuhr und Werkstückspindel und zwischen Werkstückabfuhr und Werkstückspindel angeordnet, so dass zwischen Einhausung und Bearbeitungseinrichtung nur beschränkte "Lücken" für die Werkstückzu- und -abfuhr verbleiben.

Die aus dem Stand der Technik bekannten Vorschubeinrichtungen für eine Bearbeitungseinrichtung einer Vertikaldrehmaschine weisen den Nachteil eines großen Bauraums auf. Insbesondere die aus DE 10 2008 045 069 A1 bekannte Vorschubeinrichtung schließt aufgrund der in die Y-Richtung ragenden Führung des dritten Schlittens einen erheblichen Anteil der für die Zufuhr und Abfuhr der Werkstücke verbleibenden Lücken. Dies verkompliziert die Bestückung der Werkstückspindel mit Werkstücken der Werkstückzufuhr, was in hohen Fertigungsnebenzeiten und demnach hohen Stückkosten resultiert.

### Darstellung der Erfindung

Der vorliegenden Erfindung lag daher als technisches Problem zu Grunde, eine Vorschubeinrichtung für eine Bearbeitungseinrichtung einer Vertikaldrehmaschine zur Bearbeitung eines Werkstücks, das bevorzugt zumindest abschnittsweise aus Metall oder dergleichen besteht, bereitzustellen, die einen geringen Bauraum aufweist und kompakt ausgebildet ist.

Der Erfindung liegt der Gedanke zugrunde, dass der große Bauraum der Vorschubeinrichtungen aus dem Stand der Technik vor allem dadurch begründet ist, dass einzelne Schlitten der Vorschubeinrichtung zur Bereitstellung der Verfahrbarkeit in unterschiedliche Richtungen als einzelne Einheiten modular hinter- bzw. nebeneinander aufgebaut sind. Hierdurch ergibt sich die Gesamtabmessung der Vorschubeinrichtung im Wesentlichen aus der Addition der Abmessungen der einzelnen Schlittenmodule. Im Resultat erfordern die Vorschubeinrichtungen aus dem Stand der Technik einen großen Bauraum.

Die vorliegende Erfindung macht sich diese Erkenntnis zu Nutzen und stellt eine Vorschubeinrichtung zum Vorschub bzw. Zustellen einer Bearbeitungseinrichtung einer Vertikaldrehmaschine zur Bearbeitung eines Werkstücks bereit, das bevorzugt zumindest abschnittsweise aus Metall oder dergleichen besteht. Die Vorschubeinrichtung weist zwei Schlitten auf, wobei ein zweiter von dem ersten Schlitten getragen ist. Der erste Schlitten ist zum Verfahren in eine erste Richtung ausgebildet, z.B. der X-Richtung, und der zweite Schlitten ist zum Verfahren in eine zweite Richtung ausgebildet. Bevorzugt trägt der zweite Schlitten die Bearbeitungseinrichtung. Weiter bevorzugt sind erster und zweiter Schlitten angeordnet, so dass beim Verfahren des ersten Schlittens die Bearbeitungseinrichtung und der zweite Schlitten in die erste Richtung verfahren und beim Verfahren des zweiten Schlittens die Bearbeitungseinrichtung in die zweite Richtung verfährt. Die erste Richtung unterscheidet sich von der zweiten Richtung und ist bevorzugt rechtwinklig zu ihr. Der zweite Schlitten ist an mindestens einer Seitenfläche des ersten Schlittens gelagert und erstreckt sich über die Oberseite des ersten Schlittens. Unter einer Seitenfläche eines Schlittens wird erfindungsgemäß eine Fläche verstanden, die sich in die Höhenrichtung des Schlittens erstreckt. Insbesondere handelt es sich hier um eine Fläche, die sich in einem Winkel ≠ 0° und ≠ 180° (im Folgenden als "schräg" bezeichnet) und bevorzugt rechtwinklig zu einer von Führungen des Schlittens aufgespannten Ebene angeordnet ist.

Erfindungsgemäß wird demnach die Ausdehnung des ersten Schlittens in dessen Höhenrichtung zur Lagerung des zweiten Schlittens verwendet. Im Resultat kann so die durch Vorsehen der Achse bedingte Anhebung der Spitzenhöhe minimiert werden. Darüber hinaus kann durch die Erstreckung des zweiten Schlittens über die Oberseite des ersten Schlittens eine Verringerung der Vorschubeinrichtungsabmessung rechtwinklig zur Höhenrichtung erzielt werden. Erfindungsgemäß wird demnach eine Vorschubeinrichtung bereitgestellt, die ein teleskopartiges Verschachteln von zwei Schlitten ineinander ermöglicht. Die Vorschubeinrichtung eignet sich zum Verfahren einer Bearbeitungseinrichtung einer Vertikaldrehmaschine und weist einen geringen Bauraum auf, sodass eine effiziente Werkstückbestückung mit geringen Stückkosten über eine neben der Vertikaldrehmaschine angeordnete Werkstückzufuhr ermöglicht wird, selbst wenn die Vorschubeinrichtung zwischen Werkstückspindel und Werkstückzufuhr vorgesehen ist.

Bevorzugt erstreckt sich der zweite Schlitten über den gesamten ersten Schlitten und ist besonders bevorzugt an zwei sich gegenüberliegenden Seitenflächen des ersten Schlittens gelagert. Diese bevorzugte Ausgestaltung stellt eine besonders kompakte Vorschubeinrichtung bereit. Mit dieser Ausgestaltung können ferner die auf Schlitten und Lager wirkenden Kräfte und Momente wirksam abgefangen werden, sodass geringe Abmessungen und eine kompakte Bauweise auch hierdurch ermöglicht werden. Der zweite Schlitten kann dabei mit einem U-förmigen Querschnitt ausgebildet und über die Innenflächen der U-Schenkel an den Seitenflächen des ersten Schlittens gelagert sein. Dies stellt einen besonders biegesteifen und einfachen Aufbau bereit, der zu geringen Belastungen von Schlitten und Lagern führt. Ferner wird durch die U-förmige Ausbildung die Abmessung der Vorschubeinrichtung in die Höhenrichtung im besonderen Maße minimiert.

Der zweite Schlitten kann in einer bevorzugten Ausführungsform relativ zum ersten Schlitten mit einem Spindeltrieb verfahren werden. Hierdurch wird eine genaue und robuste Relativverstellbarkeit der beiden Schlitten zueinander bereitgestellt. Bevorzugt weist der zweite Schlitten hierfür eine Spindelmutter auf, die mit einer Spindel im Eingriff ist, welche besonders bevorzugt in dem ersten Schlitten gelagert ist. Durch Lagerung der Spindel im ersten Schlitten wird die Verstellvorrichtung des zweiten Schlittens in den ersten Schlitten integriert, sodass eine besonders kompakte Vorschubeinrichtung bereitgestellt werden kann.

Der Spindeltrieb kann mit einer Antriebseinrichtung angetrieben werden, die in dem ersten Schlitten angeordnet ist. Auch dies trägt zu einem besonders kleinen Bauraum der Vorschubeinrichtung bei. Ferner kann durch diese Ausgestaltung die Spitzenhöhe einer Vertikaldrehmaschine niedrig gehalten werden, an welcher die Vorschubeinrichtung angebracht ist, was sich vorteilhaft auf die Steifigkeit der Maschine und somit die Bearbeitungsgenauigkeit auswirkt. Bevorzugt weist der zweite Schlitten eine Aussparung auf, in welche sich die Antriebseinrichtung, die in dem ersten Schlitten angeordnet ist, erstrecken kann.

Alternativ kann die Antriebseinrichtung des Spindeltriebs auf der dem zweiten Schlitten abgewandten Seite des ersten Schlittens angebracht sein. Dies ermöglicht besonders biegesteife Schlitten aufgrund von reduzierten Kerbwirkungen, sodass die Schlitten kompakt und demnach leicht ausgestaltbar sind. Das niedrigere Gewicht macht sich vorteilhaft in der Dynamik der Achsbewegungen bemerkbar.

In einer bevorzugten Ausführungsform weist die Vorrichtung ferner einen dritten Schlitten zum Verfahren der Bearbeitungseinrichtung in eine dritte Richtung auf, die verschieden von und bevorzugt rechtwinklig zu der ersten und zweiten Richtung ist. Der erste Schlitten ist dabei bevorzugt an dem dritten Schlitten gelagert. Mit dieser Ausgestaltung wird eine Vorschubeinrichtung bereitgestellt, die eine Verfahrbarkeit in drei verschieden zueinander, bevorzugt rechtwinklig zueinander, angeordnete Richtungen aufweist. Folglich wird eine Vorschubeinrichtung mit hoher Variabilität bereitgestellt.

Der erste Schlitten kann relativ zum dritten Schlitten mit einem Spindeltrieb verfahrbar sein, wobei die Spindel des Spindeltriebs und/oder eine Antriebseinrichtung des Spindeltriebs bevorzugt in dem dritten Schlitten gelagert sind. Durch Lagerung des Antriebs des ersten Schlittens im dritten Schlitten wird eine besonders kompakte Vorschubeinrichtung bereitgestellt.

Der erste Schlitten kann ferner Aussparungen aufweisen, in denen Führungen zur Lagerung des ersten Schlittens vorgesehen sind. Durch die Aussparungen können die Führungen des ersten Schlittens in diesen integriert werden, sodass die Höhenerstreckung des ersten Schlittens und demnach jene der Vorschubeinrichtung verringert werden.

Ferner kann der zweite Schlitten bevorzugt auf der Seite, die dem ersten Schlitten abgewandt ist, außerzentrisch einen Montageabschnitt für eine Bearbeitungseinrichtung aufweisen. Nahe dem Montageabschnitt kann der Schlitten eine der bei Werkzeugmaschinen übliche Linearführung aufweisen. Die außerzentrische Montagemöglichkeit der Bearbeitungseinrichtung ermöglicht es, den Masseschwerpunkt außerzentrisch anzuordnen, was es wiederum gestattet, dass die bei der Bearbeitung aus der Masse der Bearbeitungseinrichtung resultierenden Kräfte im Wesentlichen von den Linearführungen abgefangen werden. Dem Montageabschnitt gegenüber liegend ist somit im Wesentlichen noch ein Kippmoment abzufangen, was geringere Anforderungen an die Festigkeit der dortigen Lagerung stellt. An dieser Seitenfläche ist der zweite Schlitten somit bevorzugt mittels mindestens einer Wälzlagerung gelagert, die bevorzugt einstellbar ist. Durch das Vorsehen der Wälzlagerung kann auf besonders platzsparende Weise das von einer am Montageabschnitt angebrachten Bearbeitungseinrichtung auf den zweiten Schlitten ausgeübte Kippmoment aufgenommen werden. Durch die Einstellbarkeit der Wälzlagerung kann das Spiel des zweiten Schlittens relativ zum ersten Schlitten eingestellt werden, sodass eine hohe Bearbeitungsgüte mit einer an der Vorschubeinrichtung angebrachten Bearbeitungseinrichtung ermöglicht wird.

Die Vorschubeinrichtung kann ferner eine Bearbeitungseinrichtung, insbesondere einen Werkzeugrevolver, aufweisen, welcher an einer dem ersten Schlitten abgewandten Seite des zweiten Schlittens angebracht ist. Bevorzugt ist diese Einrichtung an dem zuvor beschriebenen Montageabschnitt vorgesehen.

In einer weiteren Zielsetzung stellt die vorliegende Erfindung eine Vertikaldrehmaschine zur Bearbeitung eines Werkstücks, das bevorzugt zumindest abschnittsweise aus Metall oder dergleichen ausgebildet ist, mit einem Maschinengestell, einer vertikalen Werkstückspindel, die an dem Maschinengestell angebracht ist, und einer zuvor beschriebenen am Maschinengestell vorgesehenen Vorschubeinrichtung mit einer Bearbeitungseinrichtung bereit, die an einer dem ersten Schlitten abgewandten Seite des zweiten Schlittens angebracht ist. Mittels der Vorschubeinrichtung kann die Bearbeitungseinrichtung relativ zur Werkstückspindel verschoben werden. Die Vertikaldrehmaschine kann ferner eine Werkstückzufuhr aufweisen, wobei die Vorschubeinrichtung zwischen der Werkstückspindel und der Werkstückzufuhr angeordnet ist.

Hinsichtlich der Vorteile dieser Vertikaldrehmaschinen wird auf die zuvor beschriebenen Vorteile in Verbindung mit den Vorschubeinrichtungen verwiesen.

### Kurze Beschreibung der Zeichnungen

Fig. 1 zeigt eine perspektivische Ansicht einer Vertikaldrehmaschine aus dem Stand der Technik.
Fig. 2 zeigt eine perspektivische Ansicht einer Vorschubeinrichtung mit einer Bearbeitungseinrichtung für eine Vertikaldrehmaschine gemäß einer ersten Ausführungsform der vorliegenden Erfindung.
Fig. 3 zeigt eine perspektivische Ansicht der Vorschubeinrichtung aus Fig. 2.
Fig. 4 zeigt eine perspektivische Schnittansicht der Vorschubeinrichtung aus Figs. 2 und 3.
Fig. 5 zeigt eine perspektivische Ansicht einer Vorschubeinrichtung mit einer Bearbeitungseinrichtung gemäß einer zweiten bevorzugten Ausführungsform der vorliegenden Erfindung.
Fig. 6 zeigt eine perspektivische Ansicht der Vorschubeinrichtung aus Fig. 5.
Fig. 7 zeigt eine perspektivische Schnittansicht der Vorschubeinrichtung aus Figs. 5 und 6.

### Detaillierte Beschreibung bevorzugter Ausführungsformen

Im Folgenden werden bevorzugte Ausführungsformen der vorliegenden Erfindung unter Bezugnahme auf die begleitenden Zeichnungen beschrieben. Einzelne oder mehrere beliebige Merkmale der beschriebenen Ausführungsformen können kombiniert werden, um weitere bevorzugte Ausführungsformen auszubilden.

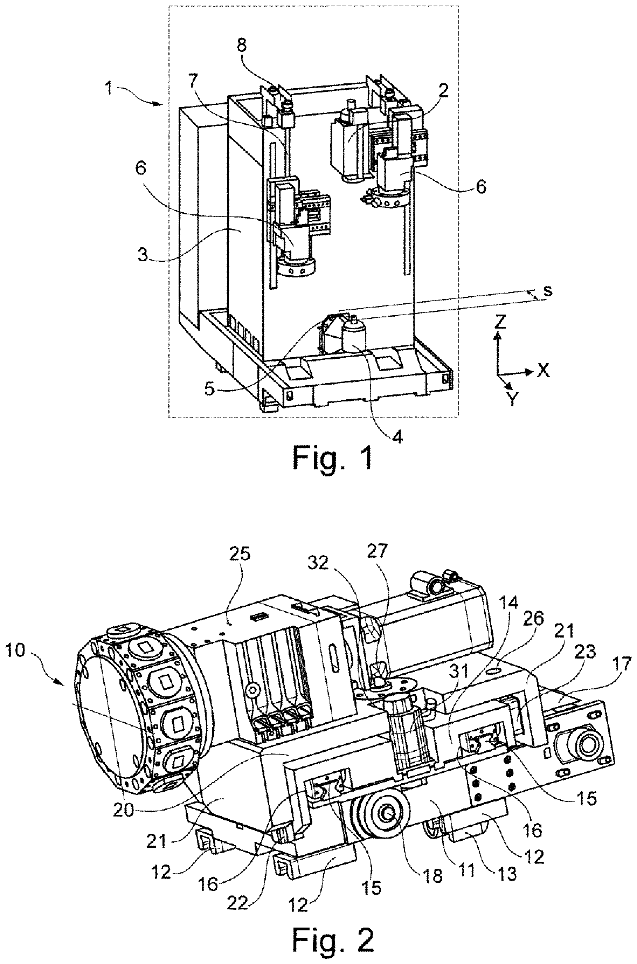

Fig. 1 zeigt eine Vertikaldrehmaschine 1 aus dem Stand der Technik. Vertikaldrehmaschinen zeichnen sich dadurch aus, dass die Rotationsachse der Werkstückspindel 2 vertikal, hier in Richtung der Z-Achse, angeordnet ist. Dabei ist die Werkstückspindel 2 bevorzugt im oberen Bereich eines Maschinengestells 3 aufgehängt, sodass ein eingespanntes Werkstück (nicht gezeigt) von der Werkstückspindel 2 in Z-Richtung herunterhängt. Entlang der Rotationsachse der Werkstückspindel 2 weist die Vertikaldrehmaschine 1 bevorzugt im unteren Bereich des Maschinengestells 3 einen Reitstock 4 mit beispielsweise einer Zentrierspitze 5 auf. Die Zentrierspitze 5 ist dabei bevorzugt derart ausgerichtet, dass diese sich vom Reitstock 4 in Richtung der Werkstückspindel 2 erstreckt. Mittels der Zentrierspitze 5 des Reitstocks 4 lassen sich insbesondere lange Werkstücke, die in der Werkstückspindel 2 eingespannt sind, zentrieren, sodass ein Aufschwingen des eingespannten Werkstücks aufgrund von beispielsweise Unwucht minimiert bzw. verhindert werden kann. Ferner ist in Fig. 1 die sogenannte Spitzenhöhe s zu sehen, die als der Abstand der Reitstockspitze zur nächsten Führungsbahn definiert ist.

Die Vertikaldrehmaschine 1 kann eine, zwei oder mehrere Bearbeitungseinrichtungen 6, beispielsweise Werkzeugrevolver, aufweisen. Vorliegend weist die Vertikaldrehmaschine 1 auf jeder Seite der Werkstückspindel 2 einen Werkzeugrevolver 6 auf, der jeweils an dem Maschinengestell 3 über eine Vorschubeinrichtung gelagert ist.

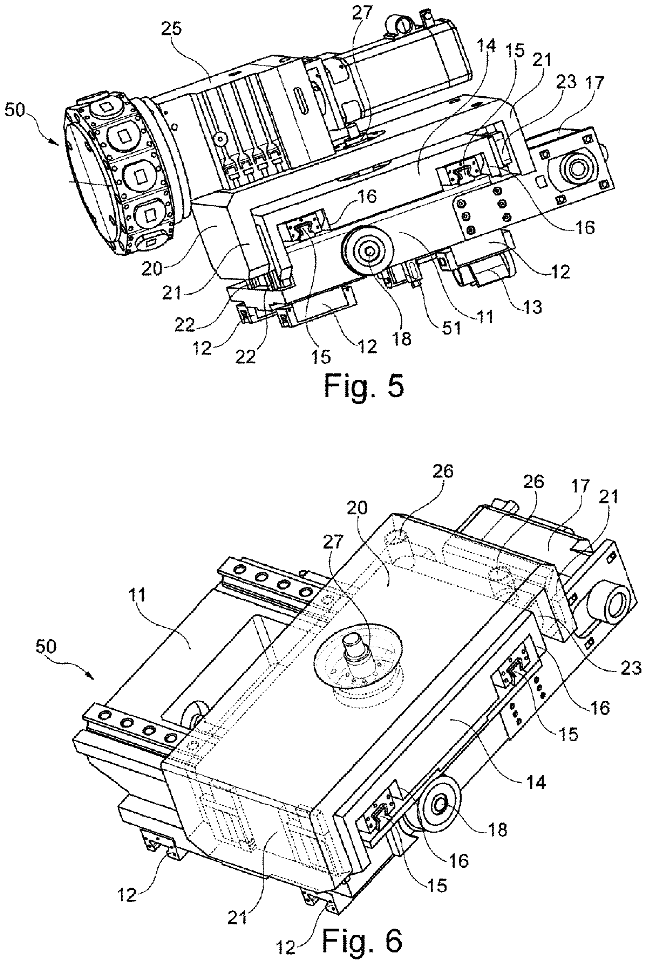

Im Folgenden werden zwei bevorzugte Ausführungsformen der vorliegenden Erfindung unter Bezugnahme auf Figs. 2 bis 7 beschrieben. Die bevorzugten Ausführungsformen beziehen sich jeweils auf eine Vertikaldrehmaschine 1 gemäß der zuvor unter Bezugnahme auf Fig. 1 beschriebenen Ausgestaltung. Die Ausführungsformen unterscheiden sich voneinander und von der in Fig. 1 beschriebenen Ausgestaltung aus dem Stand der Technik durch die Ausgestaltung der Vorschubeinrichtung der Bearbeitungseinrichtung. Im Folgenden wird vorwiegend auf diese Ausgestaltungen im Detail eingegangen.

Die Vorschubeinrichtungen 10, 50 beider Ausführungsformen weisen einen Bettschlitten 11 als dritten Schlitten auf, der in vertikaler Richtung, also der Z-Richtung, der Vertikaldrehmaschine 1 relativ zum Maschinengestell 3 und zur Werkstückspindel 2 verstellbar ist. Zur Führung des Bettschlittens 11 sind an diesem bevorzugt zwei parallel angeordnete Führungen 12 vorgesehen, die am Maschinengestell 3 angebracht sind, sodass der Bettschlitten 11 in Z-Richtung geführt verfahrbar ist. Bei den Führungsschienen 12 kann es sich um Lineargleitführungen, zum Beispiel eine Schwalbenschwanzführung, und/oder eine Linearwälzführung handeln. Auch andere Arten von Führungen sind hier denkbar. Der Bettschlitten 11 ist bevorzugt ein Gussteil, welches aus Gusseisen, Stahl oder Ähnlichem ausgebildet ist, wobei der Bettschlitten hierauf nicht beschränkt ist. Bevorzugt ist der Bettschlitten 11 rahmenförmig, zum Beispiel mit einer rechteckigen Längsschnittform, ausbildet. Dies stellt einen besonders leichten Bettschlitten 11 bereit.

Zur Verstellung des Bettschlittens 11 in Z-Richtung weist dieser bevorzugt mittig zwischen den Führungen 12 eine Spindelmutter 13 auf. Die Spindelmutter 13 ist mit einer am Maschinengestell 3 vorgesehenen Spindel 7 im Eingriff, welche über einen Motor 8 bevorzugt über ein Endlosumlaufelement antreibbar ist. Durch Rotation der Spindel 7 über den Motor 8 ist der Bettschlitten 11 über den Eingriff der Spindelmutter 13 mit der Spindel 7 geführt durch die Führungen 12 in Z-Richtung, also in Vertikalrichtung der Vertikaldrehmaschine 1, verfahrbar. Selbstverständlich sind hier auch andere Einrichtungen zur Verstellung des Bettschlittens 11 in Z-Richtung denkbar. Beispielsweise kann die Verstellung mittels einer Kette und Zahnrädern, einer Zahnstange etc. erfolgen.

Darüber hinaus weisen beide Verstellvorrichtungen 10, 50 der bevorzugten Ausführungsformen der vorliegenden Erfindung einen Querschlitten 14 als ersten Schlitten auf. Der Querschlitten 14 ist dabei derart angeordnet und ausgestaltet, dass dieser relativ zum Bettschlitten 11 in einer Richtung, die von der Z-Richtung abweicht, bevorzugt der X-Richtung verfahrbar ist. Hierfür weist der Querschlitten 14 bevorzugt zwei parallel zueinander angeordnete Führungen 15 auf, die an dem Bettschlitten 11 angebracht sind. Die Führungen 15 des Querschlittens 14 erstrecken sich dabei bevorzugt rechtwinklig zu den Führungen 12 des Bettschlittens 11 und/oder sind auf der den Führungen 12 abgewandten Seite des Bettschlittens 11 angeordnet. Bei den Führungen 15 des Querschlittens 14 kann es sich um die gleichen Führungen wie jenen des Bettschlittens 11, die zuvor beschrieben wurden, handeln.

Bevorzugt weist der Querschlitten 14 Führungsnuten 16 als Aussparungen auf, in denen die Führungen 15 vorgesehen sind. Die Führungen 15 und Führungsnuten 16 weisen dabei bevorzugt eine derartige Ausgestaltung auf, dass der Querschlitten 14 im montierten Zustand am Bettschlitten 11 anliegt bzw. angrenzt. Unter Anliegen wird hier ein Zustand verstanden, bei dem ein Abstand der beiden Schlitten lediglich so groß ist, dass diese relativ zueinander ohne Berührung bewegt werden können. Eine derartige Ausgestaltung führt zu einer besonders geringen Bauhöhe der Vorschubeinrichtung 10, 50 in Y-Richtung, also rechtwinklig zu der vom Bettschlitten 11 und Querschlitten 14 aufgespannten Verfahrebene.

Die Verstellbewegung des Querschlittens 14 in X-Richtung erfolgt bevorzugt mittels eines Spindeltriebs. Hierzu ist in dem rahmenförmigen Bettschlitten 11 eine Spindel gelagert, die sich parallel zu den Führungsschienen 15 erstreckt. Bevorzugt ist diese Spindel mittig zwischen den Führungsschienen 15 vorgesehen. Der Querschlitten 14 weist eine Spindelmutter auf, die sich von der dem Bettschlitten 11 zugewandten Seite aus erstreckt und mit der im Bettschlitten 11 gelagerten Spindel im Eingriff sein kann. Am Bettschlitten 11 ist bevorzugt ein Vorschubmotor 17 angebracht, der über eine Riemenscheibe 18 und einen Riemen (nicht gezeigt) mit der Spindel verbunden werden kann. Durch Antrieb des Motors 17 ist demnach die Spindel über die Riemenscheibe 18 rotierbar, wobei über die Rotation der Spindel der Querschlitten 14 über die Spindelmutter in X-Richtung relativ zum Bettschlitten 11 verfahren werden kann. Durch diese bevorzugte Ausgestaltung wird auf besonders kompakte und wenig komplexe Weise ein verstellbarer X-Schlitten bereitgestellt. Durch Integration des Querschlittenantriebs 17 in den Bettschlitten 11 kann die Ausdehnung der Vorschubeinrichtung 10, 50 in Y-Richtung minimiert werden. Ferner kann durch Anordnen des Motors 17 am Bettschlitten 11 eine Vertikaldrehmaschine mit geringer Komplexität bereitgestellt werden, da keine komplexen Einrichtungen vorzusehen sind, um ein Antriebsmoment für den Spindeltrieb des Querschlittens 11 der Vorschubeinrichtung 10, 50 von außerhalb zuzuführen. Der Querschlitten 14 ist bevorzugt aus Stahl ausgebildet, wobei hier auch andere Materialien denkbar sind.

Ferner weisen die bevorzugten Ausführungsformen der vorliegenden Erfindung einen Y-Schlitten 20 als zweiten Schlitten auf. Der Y-Schlitten 20 ist relativ zum Querschlitten 14 in Y-Richtung, also rechtwinklig zur Verfahrrichtung des Querschlittens 14, der X-Richtung, und des Bettschlittens 11, der Z-Richtung, verfahrbar. Gemäß den bevorzugten Ausführungsformen der vorliegenden Erfindung ist der Y-Schlitten 20 mit einem U-förmigen Querschnitt ausgebildet. Zur Führung des Schlittens 20 sind an den Innenflächen der U-Schenkel 21 jeweils bevorzugt parallel zueinander vorgesehene Führungen 22, 23 angeordnet. Der U-förmige Y-Schlitten 30, 50 ist derart ausgestaltet, dass sich die U-Schenkel 21 seitlich entlang des Querschlittens 14 erstrecken können, wobei die Führungen 22, 23 an äußeren Seitenflächen des Querschlittens 14 angebracht sind. Durch Vorsehen der Führungen 22, 23 des Y-Schlittens 20 an Seitenflächen des Querschlittens 14 wird eine besonders kompakte Vorschubeinrichtung 10, 50 bereitgestellt. Die Führungen 22, 23 sind bevorzugt rechtwinklig zu den Führungen 15 und 12 vorgesehen. Es wird darauf hingewiesen, dass anstatt der U-förmigen Ausgestaltung des Y-Schlittens 20 auch andere Ausgestaltungen denkbar sind. Beispielsweise ist eine Ausgestaltung denkbar, bei welcher der Y-Schlitten den Querschlitten nicht mit den U-Schenkeln 21 umgreift, sondern ein oder mehrere zentrale Stege aufweist, die in einer oder mehreren Nuten, welche in dem Querschlitten 14 vorgesehen sind, geführt werden. Auch alternative Ausgestaltungen sind hier denkbar. Der Y-Schlitten 20 ist bevorzugt aus Stahl ausgebildet, wobei hier auch anderen Materialien denkbar sind.

In den bevorzugten Ausführungsformen der vorliegenden Erfindung ist eine Werkzeugrevolvereinrichtung 25 an der Seite an den Y-Schlitten 20 angeflanscht, die dem Querschlitten 14 gegenüberliegt. Die Werkzeugrevolvereinrichtung 25 weist einen Werkzeugrevolver, in denen verschiedene Werkzeuge einwechselbar sind, die auch separat angetrieben werden können, und einen Revolverantriebsmotor auf. Die Werkzeugrevolvereinrichtung 25 ist als Einheit bevorzugt außerzentrisch an den Y-Schlitten 20 angeflanscht.

In den bevorzugten Ausführungsformen der vorliegenden Erfindung sind die Führungen 23 des Y-Schlittens 20 an der Seitenfläche des Querschlittens 14, die der Seite des Querschlittens 14 gegenüberliegen, an welcher die Revolvereinrichtung 25 angeflanscht ist, als Wälzführungen ausgebildet. Dies ermöglicht eine gute Aufnahme des durch die Revolvereinrichtung 25 erzeugten Kippmoments auf den Y-Schlitten 20. Die Wälzführungen 23 sind dabei bevorzugt derart einstellbar, dass das Spiel in Z-Richtung des Y-Schlittens 20 relativ zum Querschlitten 14 anpassbar ist. Hierfür sind Öffnungen 26 auf der Oberseite des Y-Schlittens 20 vorgesehen, durch welche ein Werkzeug zur Spieleinstellung einführbar ist.

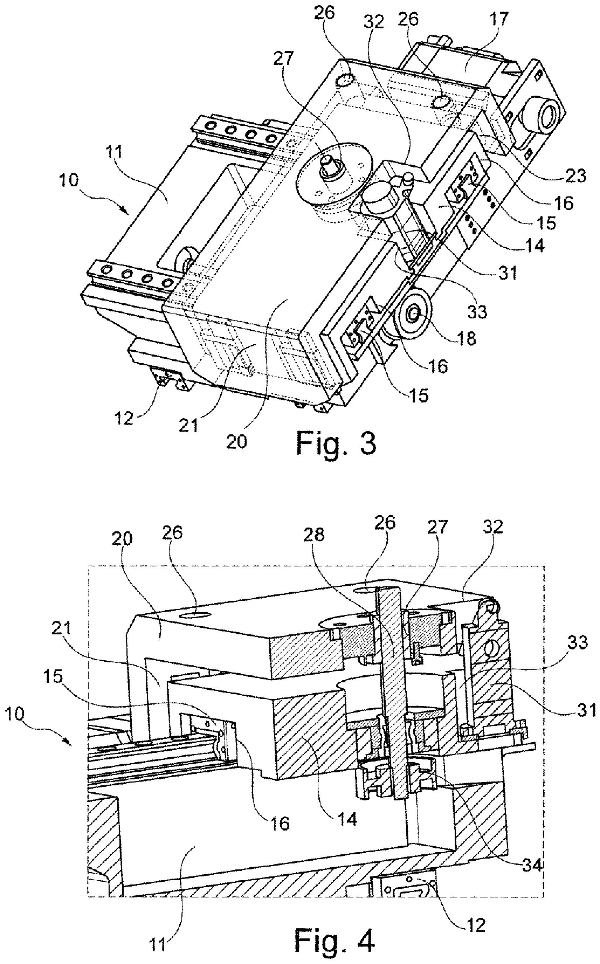

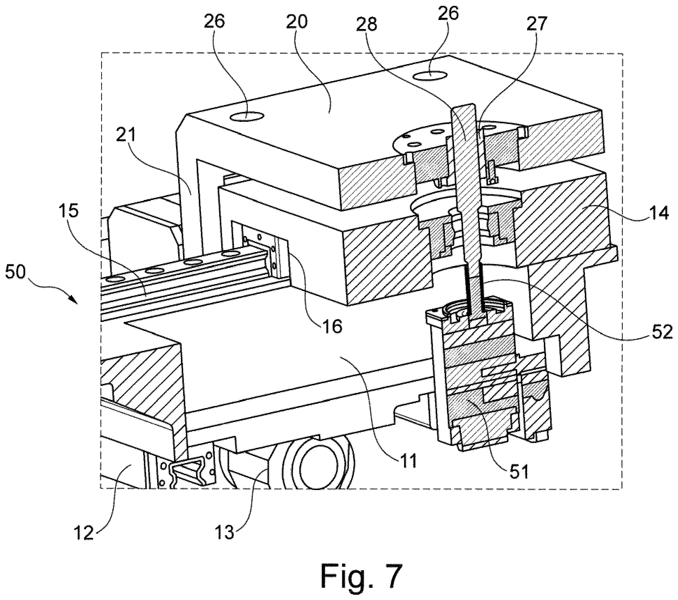

Zur Verstellbarkeit des Y-Schlittens 20 in Y-Richtung gegenüber dem Querschlitten 14 weist der Y-Schlitten 20 bevorzugt eine zentrale Spindelmutter 27 auf. Die Spindelmutter 27 kann mit einer Spindel 28 (siehe Figs. 4 und 7) im Eingriff sein. Die Spindel 28 ist in dem Querschlitten 14 beispielsweise über ein Wälzlager gelagert. Mittels eines Vorschubmotors 31, 51 ist ein Drehmoment auf die Spindel 28 übertragbar und somit der Y-Schlitten 20 geführt entlang der Führungen 22, 23 über die Spindelmutter 27 in Y-Richtung relativ zum Querschlitten 14 und Bettschlitten 11 verfahrbar.

In einer ersten bevorzugten Ausführungsform der Verstellvorrichtung 10 gemäß der vorliegenden Erfindung ist der Vorschubmotor 31 in dem Querschlitten 14 gelagert bzw. in diesen integriert und erstreckt sich bevorzugt parallel und beabstandet zur Spindel 28. Genauer gesagt weist der Querschlitten 14 eine Aussparung 33 auf, in welcher der Motor 31 aufgenommen ist. Da der Vorschubmotor 31 eine Höhenerstreckung aufweist, die größer als jene des Querschlittens 14 sein kann, kann in dem Y-Schlitten 20 eine Aussparung 32 vorgesehen sein, in die sich der Vorschubmotor 31 erstrecken kann. An einem Ende der Spindel 28 kann eine Riemenscheibe 34 vorgesehen sein, die beispielsweise unterhalb des Querschlittens 14 und innerhalb des Bettschlittens 11 angeordnet ist. Über ein Endlosumlaufelement kann das Drehmoment des Vorschubmotors 31 an die Spindel 28 über die Riemenscheibe 34 übertragen werden. Hier sind selbstverständlich auch andere Drehmomentübertragungen denkbar, beispielsweise über eine Kette.

Gemäß einer zweiten bevorzugten Ausführungsform der Vorschubeinrichtung der vorliegenden Erfindung ist der Vorschubmotor 51 in dem Querschlitten 14 gelagert und bevorzugt konzentrisch mit der Spindel 28 angeordnet. Über eine Hülse 52, die verzahnt, verstiftet oder anderweitig verdrehgesichert ist, kann so das Drehmoment des Vorschubmotors 51 an die Spindel 28 übertragen werden.

## Patentansprüche

1. Vorschubeinrichtung (10; 50) zum Verfahren einer Bearbeitungseinrichtung (25) einer Vertikaldrehmaschine (1) zur Bearbeitung eines Werkstücks, das bevorzugt zumindest abschnittsweise aus Metall oder dergleichen ausgebildet ist, aufweisend
einen ersten Schlitten (14) zum Verfahren der Bearbeitungseinrichtung (25) in eine erste Richtung (X), und
einen zweiten Schlitten (20) zum Verfahren der Bearbeitungseinrichtung (25) in eine zweite Richtung (Y), die sich von der ersten (X) Richtung unterscheidet und bevorzugt rechtwinklig zu der ersten (X) Richtung ist,
**dadurch gekennzeichnet, dass** der zweite Schlitten (20) an mindestens einer Seitenfläche des ersten Schlittens (14) gelagert ist und sich über die Oberseite des ersten Schlittens (14) erstreckt.

2. Vorrichtung (10; 50) nach Anspruch 1, bei welcher sich der zweite Schlitten (20) über den gesamten ersten Schlitten (14) erstreckt und bevorzugt an zwei sich gegenüberliegenden Seitenflächen des ersten Schlittens (14) gelagert ist.

3. Vorrichtung (10; 50) nach Anspruch 1 oder 2, bei welcher der zweite Schlitten (20) mit einem U-förmigen Querschnitt ausgebildet und über die Innenfläche(n) eines/der U-Schenkel(s) (21) an der/den Seitenfläche(n) des ersten Schlittens (14) gelagert ist.

4. Vorrichtung (10; 50) nach einem der vorhergehenden Ansprüche, bei welcher der zweite Schlitten (20) relativ zum ersten Schlitten (14) mit einem Spindeltrieb verfahrbar ist, wobei der zweite Schlitten (20) bevorzugt eine Spindelmutter (27) aufweist, die mit einer Spindel (28) im Eingriff ist, welche besonders bevorzugt in dem ersten Schlitten (14) gelagert ist.

5. Vorrichtung (10; 50) nach Anspruch 4, ferner mit einer Antriebseinrichtung (31) zum Antreiben des Spindeltriebs, die in den ersten Schlitten (14) integriert ist, wobei die Antriebseinrichtung bevorzugt einen Elektromotor umfasst, der mit seiner Abtriebswelle in der Flucht der Spindel angeordnet ist.

6. Vorrichtung (10; 50) nach einem der Ansprüche 4 oder 5, ferner mit einer Antriebseinrichtung (51) zum Antreiben des Spindeltriebs, die auf der dem zweiten Schlitten (20) abgewandten Seite des ersten Schlittens (14) vorgesehen ist, wobei die Antriebseinrichtung bevorzugt einen Elektromotor umfasst, dessen Abtriebswelle mit einer Riemenscheibe (34) auf der Spindel (28) gekoppelt ist.

7. Vorrichtung (10; 50) nach einem der vorhergehenden Ansprüche, ferner mit einem dritten Schlitten (11) zum Verfahren der Bearbeitungseinrichtung (25) in eine dritte Richtung (Z), die verschieden von und bevorzugt rechtwinklig zu der ersten (X) und zweiten (Y) Richtung ist, wobei der erste Schlitten (14) an dem dritten Schlitten (11) gelagert ist.

8. Vorrichtung (10; 50) nach Anspruch 7, bei welcher der erste Schlitten (14) relativ zum dritten Schlitten (11) mit einem Spindeltrieb verfahrbar ist, wobei die Spindel des Spindeltriebs und/oder eine Antriebseinrichtung des Spindeltriebs bevorzugt in dem dritten Schlitten (11) gelagert sind.

9. Vorrichtung (10; 50) nach einem der vorherigen Ansprüche, bei welcher der erste Schlitten (14) Aussparungen (16) aufweist, in denen Führungen (15) zur Lagerung des ersten Schlittens (14) vorgesehen sind.

10. Vorrichtung (10; 50) nach einem der vorhergehenden Ansprüche, bei welcher der zweite Schlitten (20) auf der Seite, die dem ersten Schlitten (14) abgewandt ist, außerzentrisch einen Montageabschnitt für eine Bearbeitungseinrichtung (25) aufweist, wobei der zweite Schlitten (20) bevorzugt dem Montageabschnitt gegenüber liegend mittels einer Wälzlagerung, die bevorzugt einstellbar ist, an der Seitenfläche des ersten Schlittens (14) gelagert ist.

11. Vorrichtung (10; 50) nach Anspruch 10, ferner mit einer als Werkzeugrevolver ausgestalteten Bearbeitungseinrichtung (25), welche auf dem Montageabschnitt des zweiten Schlittens (20) angebracht ist.

12. Vorrichtung (10; 50) nach einem der Ansprüche 1 bis 11, ferner mit einer Bearbeitungseinrichtung (25), insbesondere einem Werkzeugrevolver, welche auf einer dem ersten Schlitten (14) abgewandten Seite des zweiten Schlittens (20) angebracht ist.

13. Vertikaldrehmaschine (1) zur Bearbeitung eines Werkstücks, das bevorzugt zumindest abschnittsweise aus Metall oder dergleichen ausgebildet ist, mit einem Maschinengestell (3),
einer vertikalen Werkstückspindel (2), die an dem Maschinengestell (3) angebracht ist, und
einer Vorschubeinrichtung (10; 50) nach Anspruch 11, die an dem Maschinengestell (3) neben der Werkstückspindel (2) angebracht ist, um die Bearbeitungseinrichtung relativ zur Werkstückspindel Verfahren zu können.

14. Maschine nach Anspruch 13, ferner mit
einer Werkstückzufuhr, wobei die Vorschubeinrichtung (10; 50) zwischen der Werkstückspindel (2) und der Werkstückzufuhr angeordnet ist.

## Claims

1. Feed device (10; 50) for moving a machining device (25) of a vertical lathe (1) for machining a workpiece that is preferably formed of metal or the like at least in portions,
said feed device comprising a first carriage (14) for moving the machining device (25) in a first direction (X), and
a second carriage (20) for moving the machining device (25) in a second direction (Y), which differs from the first (X) direction and is preferably at a right angle to the first (X) direction,
**characterised in that** the second carriage (20) is mounted on at least one lateral surface of the first carriage (14) and extends over the upper face of the first carriage (14).

2. Apparatus (10; 50) according to claim 1, wherein the second carriage (20) extends over the entire first carriage (14) and is preferably mounted on two opposing lateral surfaces of the first carriage (14).

3. Apparatus (10; 50) according to either claim 1 or claim 2, wherein the second carriage (20) is designed having a U-shaped cross-section and is mounted on the lateral surfaces(s) of the first carriage (14) by means of the inner surface(s) of a/the U-limb(s) (21).

4. Apparatus (10; 50) according to any of the preceding claims, wherein the second carriage (20) can be moved relative to the first carriage (14) by means of a spindle drive, wherein the second carriage (20) preferably comprises a spindle nut (27) that engages with a spindle (28) that is particularly preferably mounted in the first carriage (14).

5. Apparatus (10; 50) according to claim 4, further comprising a drive device (31) for driving the spindle drive, which drive device is incorporated into the first carriage (14), wherein the drive device preferably comprises an electric motor, the output shaft of which is arranged in alignment with the spindle.

6. Apparatus (10; 50) according to either claim 4 or claim 5, further comprising a drive device (51) for driving the spindle drive, which drive device is provided on the side of the first carriage (14) that is remote from the second carriage (20), wherein the drive device preferably comprises an electric motor, the output shaft of which is coupled to a pulley (34) on the spindle (28).

7. Apparatus (10; 50) according to any of the preceding claims, further comprising a third carriage (11) for moving the machining device (25) in a third direction (Z), which is different from and preferably at a right angle to the first (X) and second (Y) direction, wherein the first carriage (14) is mounted on the third carriage (11) .

8. Apparatus (10; 50) according to claim 7, wherein the first carriage (14) can be moved relative to the third carriage (11) by means of a spindle drive, wherein the spindle of the spindle drive and/or a drive device of the spindle drive is/are preferably mounted in the third carriage (11).

9. Apparatus (10; 50) according to any of the preceding claims, wherein the first carriage (14) comprises recesses (16) in which guides (15) for mounting the first carriage (14) are provided.

10. Apparatus (10; 50) according to any of the preceding claims, wherein the second carriage (20), on the side remote from the first carriage (14), comprises an off-centre installation portion for a machining device (25), wherein the second carriage (20) is mounted on the lateral surface of the first carriage (14) by means of a roller bearing, which is preferably adjustable, preferably so as to be opposite the installation portion.

11. Apparatus (10; 50) according to claim 10, further comprising a machining device (25) that is designed as a tool turret and that is attached on the installation portion of the second carriage (20).

12. Apparatus (10; 50) according to any of claims 1 to 11, further comprising a machining device (25), in particular a tool turret, which is attached on a side of the second carriage (20) that is remote from the first carriage (14).

13. Vertical lathe (1) for machining a workpiece that is preferably formed of metal or the like at least in portions, said vertical lathe comprising a lathe frame (3),
a vertical workpiece spindle (2) that is attached to the lathe frame (3), and
a feed device (10; 50) according to claim 11, which is attached to the lathe frame (3) next to the workpiece spindle (2) in order to be able to move the machining device relative to the workpiece spindle.

14. Lathe according to claim 13, further comprising a workpiece supply means, wherein the feed device (10; 50) is arranged between the workpiece spindle (2) and the workpiece supply means.

## Revendications

1. Dispositif d'avance (10; 50) pour déplacer un dispositif d'usinage (25) d'un tour vertical (1) pour l'usinage d'une pièce, qui est réalisée de préférence au moins par section en métal ou similaire, présentant
un premier coulisseau (14) pour déplacer le dispositif d'usinage (25) dans une première direction (X), et
un deuxième coulisseau (20) pour déplacer le dispositif d'usinage (25) dans une deuxième direction (Y), qui se distingue de la première (X) direction et est de préférence en angle droit par rapport à la première (X) direction,
**caractérisé en ce que** le deuxième coulisseau (20) est logé au niveau d'au moins une surface latérale du premier coulisseau (14) et s'étend sur le côté supérieur du premier coulisseau (14).

2. Dispositif (10 ; 50) selon la revendication 1, dans lequel le deuxième coulisseau (20) s'étend sur tout le premier coulisseau (14) et est logé de préférence au niveau de deux surfaces latérales opposées du premier coulisseau (14).

3. Dispositif (10 ; 50) selon la revendication 1 ou 2, dans lequel le deuxième coulisseau (20) est réalisé avec une section transversale en forme de U et est logé par le biais de la/des surface(s) intérieure(s) d'une/des branche(s) en U (21) au niveau du/des surface(s) latérale(s) du premier coulisseau (14).

4. Dispositif (10 ; 50) selon l'une quelconque des revendications précédentes, dans lequel le deuxième coulisseau (20) peut être déplacé par rapport au premier coulisseau (14) avec une transmission à broche, dans lequel le deuxième coulisseau (20) présente de préférence un écrou de broche (27), qui est en prise avec une broche (28), laquelle est logée le plus préférentiellement dans le premier coulisseau (14).

5. Dispositif (10 ; 50) selon la revendication 4, en outre avec un dispositif d'entraînement (31) pour l'entraînement de la transmission à broche, qui est intégrée dans le premier coulisseau (14), dans lequel le dispositif d'entraînement comprend de préférence un moteur électrique, qui est agencé avec son arbre de sortie dans l'alignement de la broche.

6. Dispositif (10 ; 50) selon l'une quelconque des revendications 4 ou 5, en outre avec un dispositif d'entraînement (51) pour l'entraînement de la transmission à vis, qui est prévue sur le côté du premier coulisseau (14) opposé au deuxième coulisseau (20), dans lequel le dispositif d'entraînement comprend de préférence un moteur électrique, dont l'arbre de sortie est couplé avec une poulie (34) sur la broche (28).

7. Dispositif (10 ; 50) selon l'une quelconque des revendications précédentes, en outre avec un troisième coulisseau (11) pour déplacer le dispositif d'usinage (25) dans une troisième direction (Z), qui est différente de et de préférence en angle droit par rapport à la première (X) et deuxième (Y) direction, dans lequel le premier coulisseau (14) est logé au niveau du troisième coulisseau (11).

8. Dispositif (10 ; 50) selon la revendication 7, dans lequel le premier coulisseau (14) peut être déplacé par rapport au troisième coulisseau (11) avec une transmission à broche, dans lequel la broche de la transmission à broche et/ou un dispositif d'entraînement de la transmission à broche sont logés de préférence dans le troisième coulisseau (11).

9. Dispositif (10 ; 50) selon l'une quelconque des revendications précédentes, dans lequel le premier coulisseau (14) présente des évidements (16), dans lesquels des guidages (15) sont prévus pour le logement du premier coulisseau (14).

10. Dispositif (10 ; 50) selon l'une quelconque des revendications précédentes, dans lequel le deuxième coulisseau (20) sur le côté, qui est opposé au premier coulisseau (14), présente de manière excentrée une section de montage pour un dispositif d'usinage (25), dans lequel le deuxième coulisseau (20) est logé de préférence en face de la section de montage au moyen d'un roulement à rouleaux, qui est de préférence réglable, au niveau de la surface latérale du premier coulisseau (14).

11. Dispositif (10 ; 50) selon la revendication 10, en outre avec un dispositif d'usinage (25) configuré en tant que revolver d'outil, lequel est monté sur la section de montage du deuxième coulisseau (20).

12. Dispositif (10 ; 50) selon l'une quelconque des revendications 1 à 11, en outre avec un dispositif d'usinage (25), en particulier un revolver d'outil, lequel est monté sur un côté du deuxième coulisseau (20) opposé au premier coulisseau (14).

13. Tour vertical (1) pour l'usinage d'une pièce, qui est réalisée de préférence au moins par section en métal ou similaire, avec un bâti de machine (3),
une broche de pièce verticale (2), qui est montée au niveau du bâti de machine (3), et
un dispositif d'avance (10 ; 50) selon la revendication 11, qui est monté au niveau du bâti de machine (3) à côté de la broche d'outil (2), pour pouvoir déplacer le dispositif d'usinage par rapport à la broche d'outil.

14. Machine selon la revendication 13, en outre avec
une amenée de pièce, dans lequel le dispositif d'avance (10 ; 50) est agencé entre la broche d'outil (2) et l'amenée de pièce.
